(19) Europäisches Patentamt / European Patent Office / Office européen des brevets

(11) **EP 2 801 149 B1**

(12) **EUROPÄISCHE PATENTSCHRIFT**

(45) Veröffentlichungstag und Bekanntmachung des Hinweises auf die Patenterteilung:
**30.11.2022 Patentblatt 2022/48**

(21) Anmeldenummer: **13703339.5**

(22) Anmeldetag: **22.01.2013**

(51) Internationale Patentklassifikation (IPC):
**H02M 7/483** (2007.01)

(52) Gemeinsame Patentklassifikation (CPC):
**H02M 7/483; H02M 7/4835**

(86) Internationale Anmeldenummer:
**PCT/EP2013/051081**

(87) Internationale Veröffentlichungsnummer:
**WO 2013/120664 (22.08.2013 Gazette 2013/34)**

(54) **VERFAHREN ZUM BETRIEB EINES MEHRPHASIGEN, MODULAREN MULTILEVELSTROMRICHTERS**

METHOD FOR OPERATING A MULTI-PHASE MODULAR MULTI-LEVEL POWER CONVERTER

PROCÉDÉ PERMETTANT DE FAIRE FONCTIONNER UN CONVERTISSEUR DE PUISSANCE MULTINIVEAU MODULAIRE, POLYPHASÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2012 DE 102012202173**

(43) Veröffentlichungstag der Anmeldung:
**12.11.2014 Patentblatt 2014/46**

(73) Patentinhaber: **Siemens Aktiengesellschaft**
**80333 München (DE)**

(72) Erfinder:
• **BÄRNKLAU, Hans**
**01159 Dresden (DE)**
• **ROHNER, Steffen**
**68309 Mannheim (DE)**
• **GENSIOR, Albrecht**
**01277 Dresden (DE)**
• **BERNET, Steffen**
**01454 Radeberg (OT Ullersdorf) (DE)**

(56) Entgegenhaltungen:
**WO-A1-2011/127983     CA-A1- 2 776 859**

• **ANTONIOS ANTONOPOULOS ET AL: "On dynamics and voltage control of the Modular Multilevel Converter", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-10, XP031541295, ISBN: 978-1-4244-4432-8**

**Beschreibung**

Die Erfindung bezieht sich auf ein Verfahren zum Betrieb eines mehrphasige, modularen Multilevelstromrichters, an dessen Wechselspannungs-Klemmen eine Last angeschlossen ist.

Die Topologie eines modularen Multilevelstromrichters ist aus der DE 101 03 031A1 bekannt. In der Literatur wird der modulare Multilevelstromrichter auch als M2C oder auch als M2LC (**M**odular **M**ulti**L**evel **C**onverter) bezeichnet. Dieser modulare Multilevelstromrichter gehört wie ein Cascaded-H-Bridge-Converter zu den Zellenstromrichtern. In der Veröffentlichung mit dem Titel "New Concept for High Voltage - Modular Multi-level Converter", von R. Marquardt und A. Lesnicar, veröffentlicht bei der PESC 2004 Conference in Aachen, werden gängige Multilevelstromrichter in Bezug auf industrielle Realisierung analysiert und miteinander verglichen, wobei auch ein modularer Multilevelstromrichter in der Verwendung als Kurzkupplung vorgstellt wird.

Gegenüber einem Cascaded-H-Bridge-Converter weisen die Stromrichterzellen eines modularen Multilevelstromrichters gemäß der DE 101 03 031A1 jeweils eine Halbbrücke zweier elektrisch in Reihe geschalteter abschaltbarer Halbleiterschalter, insbesondere **I**nsulated-**G**ate-**B**ipolar-**T**ransistoren (IGBT), auf, wobei zur Speicherung von Energie ein Energiespeicher vorgesehen ist, der als Gleichspannungskondensator realisiert ist.

Ein derartiger Gleichspannungskondensator weist gemäß der älteren nationalen Patentanmeldung mit dem amtlichen Aktenzeichen 10 2011 006 988.7 eine Vielzahl von handelsüblichen Kondensatoren, insbesondere Elektrolytkondensatoren, auf, die elektrisch parallel und/oder in Reihe geschaltet sind. An Stelle von Elektrolytkondensatoren können auch Folienkondensatoren verwendet werden. Dieser hohe Kondensatoraufwand führt zu erhöhtem Platzbedarf eines Stromrichters mit einer Vielzahl von Stromrichterzellen, der einen erhöhten konstruktiven und mechanischen Aufwand verursacht.

Gemäß der DE 101 03 031A1 weist jedes Phasenmodul eines modularen Multilevelstromrichters eine Vielzahl von Stromrichterzellen auf, die auch als Submodule bezeichnet werden, die elektrisch in Reihe geschaltet sind. Es ist vorteilhaft, wenn die Stromrichterzellen eines Phasenmoduls symmetrisch auf deren beiden Ventilzweige aufgeteilt sind. Im Gegensatz zum Cascaded-H-Bridge-Converter werden die Submodul-Kondensatoren nicht durch eigene Diodengleichrichter, sondern über die Verbindung zum DC-Zwischenkreis geladen. Durch den Anschluss der elektrisch in Reihe geschalteten Submodule eines Phasenmduls, beispielsweise eines dreiphasigen, modularen Multilevelstromrichters am DC-Bus, muss bei symmetrischem Betrieb innerhalb der sechs Ventilzweige an den Klemmen eines jeden Submoduls im zeitlichen Mittel eine Modulspannung gemäß folgender Gleichung:

$$\overline{u}_{Kli,j} = \frac{1}{T_0}\int_0^{T_0} u_{Kli,j}\,dt = \frac{u_d}{2N} \approx \frac{U_d}{2N} \tag{1}$$

mit i = 1,2,... 6 und j = 1,2, ... N realisiert werden. Bei typischen Anwendungen eines modularen Multilevelstromrichters weist der Laststrom einen stark ausgeprägten Grundschwingungsanteil auf. Da der Laststrom anteilig durch die Module innerhalb eines Phasenmoduls fließt, folgt aus dem Produkt von Klemmenspannung $u_{Klij}$ und Ventilzweigstrom $i_{Zi}$ gemäß folgender Gleichung

$$p_{Kli,j} = u_{Kli,j}\,i_{zi} \tag{2}$$

und der Gleichung (1), dass Energieänderungen der Grundschwingungsfrequenz in den Kondensatoren stark ausgeprägt sind. Insbesondere diese grundschwingungsfrequenten Anteile der Energie sind bei der Dimensionierung der Kondensatoren von großer Bedeutung. Unter anderem resultiert aus den grundschwingungsfrequenten Spannungsanteilen der Energie der Einbau von Kondensatoren mit hohem Kapazitätswerten. Diese hohen Kapazitätswerte werden mittels Parallelschaltung mehrerer Kondensatoren erreicht werden. Dieser hohe Kondensatoraufwand, dargestellt bei einer zweiteiligen Stromrichterzelle der bereits erwähnten nationalen Patentanmeldung mit dem amtlichen Aktenzeichen 10 2011 006 988.7, führt zu erhöhtem Platzbedarf des Stromrichters und daraus resultieren ein hoher konstruktiver und mechanischer Aufwand sowie erhöhte Sicherheitsanforderungen.

Wichtige Kennzahlen für den Vergleich verschiedener Topologien von Spannungsstromrichtern sind die auf die maximale Scheinleistung $S_{Max}$ ($S_{Max}$ kann auch eine Rechengröße sein) bezogene im Stromrichter kapazitiv gespeicherte Energie $W_{C,ges}$ gemäß der Gleichung:

$$k_{JproVA} = \frac{W_{C,ges}}{S_{Max}} \tag{3}$$

und die im Stromrichter kapazitiv speicherbare Energie $W_{CMax,ges}$ gemäß der Gleichung:

$$k_{JproVA,Max} = \frac{W_{CMax,ges}}{S_{Max}} \qquad (4)$$

wobei im Stromrichter kapazitiv speicherbare Energie $W_{CMax,ges}$ mit folgender Gleichung:

$$W_{CMax,ges} = \sum_{i=1}^{6} \sum_{j=1}^{N} \frac{1}{2} C_{SMi,j} U_{N_{Ci,j}}^2 \qquad (5)$$

berechnet wird, wobei $U_{NCi,j}$ die Nennspannungen der Kondensatoren ist.

Bei Mittelspannungsanwendungen sind typische Werte für die Kennzahl $k_{JproVA}$ (Gleichung (3))eines 3-Level-Spannungsumrichters 6...9kJ/MVA. Beim modularen Multilevelstromrichter ist mit wesentlich höheren Werten für die Kennzahl $k_{JproVA}$ und damit der gespeicherten Energie zu rechnen.

Eine hohe gespeicherte bzw. speicherbare Energie im Stromrichter ist sowohl aus Kostengründen (Kondensatorkosten, Platzbedarf, ...) als auch aus Sicherheitsgründen nachteilig. Beides könnte mögliche Anwendungsgebiete für den modularen Multilevelstromrichter einschränken.

Eine Reduzierung des Kondensatoraufwands eines modularen Multilevelstromrichters, insbesondere eines dreiphasigen, könnte neue Anwendungsgebiete für den Multilevelstromrichter erschließen.

Dazu stellt sich zunächst die Frage, wie die Kondensatoren der Stromrichterzellen eines beispielsweise dreiphasigen, modularen Multilevelstromrichters dimensioniert werden.

Für die Dimensionierung spielen Anforderungen wie

- zulässige Maximal-/Minimalspannung der Kondensatoren,
- zulässige Verluste in den Kondensatoren, und eventuell
- zulässige Brummspannung

eine Rolle.

Eine über eine Periode $T_0$ im zeitlichen Mittel gespeicherte Energie $\overline{w}_{Ci,j}$ der Submodule wird gemäß folgender Gleichung:

$$\overline{w}_{Ci,j} = \frac{1}{T_0} \int_0^{T_0} \frac{1}{2} C_{SMi,j} u_{Ci,j}^2 dt \qquad (6)$$

Berechnet. Eine kapazitive gespeicherte Energie $w_{C,ges}$ des Stromrichters wird gemäß der Gleichung:

$$w_{C,ges} = \sum_{i=1}^{6} \sum_{j=1}^{N} \frac{1}{2} C_{SMi,j} u_{Ci,j}^2 \qquad (7)$$

bestimmt.

Die Veröffentlichung "Modulares Stromrichterkonzept für Netzkupplungsanwendung bei hohen Spannungen", von Rainer Marquardt, Anton Lesnicar und Jürgen Hildinger, abgedruckt im Tagungsband der ETG-Fachtagung 2002, Bad Nauheim, April 2002, und "Control of the Modular Multi-Level Converter for Minimized Cell Capacitance", von Stephan P. Engel und Rik W. De Doncker, abgedruckt im Konferenzband der 14th European Conference on Power Electronics and Applications (EPE 2011), Birmingham, UK, 30. August - 01. September 2011, S. 4351-4360, stellen jeweils ein Steuerverfahren vor, wodurch die Energiespeicher der Stromrichterzellen eines Multilevelstromrichters minimiert werden können. In diesen beiden Veröffentlichungen wird als Anwendungsfall eine Kurzkupplung genannt.

In der Veröffentlichung "On Dynamics and Voltage Control of the Modular Multilevel Converter" von Antonios Antonopoulos, Lennart Ängquist und Hans-Peter Nee, abgedruckt im Konferenzband der 13th European Conference on Power Electronics and Applications (EPE 2009), Barcelona, Spanien, 08.-10. September 2009, S.3353-3362, wird ein Steuerverfahren eines modularen Multilevelstromrichters vorgestellt, mit dem eine Verringerung der mittleren Kondensatorspannung - und damit der im zeitlichen Mittel gespeicherten Energie in Abhängigkeit der Lastspannung - erreicht wird. Als positiver Effekt werden verringerte Schaltverluste sowie höhere zulässige Spannungsrippel in den Kondensatoren angeführt.

Die Erfindung beruht auf der Erkenntnis, dass die in den Kondensatoren gespeicherte Energie $w_{Ci,j}$ an einem stationären Arbeitspunkt einen zeitabhängigen Anteil $\tilde{w}_{Ci,j}$ und einen konstanten Anteil $\overline{w}_{Ci,j}$ aufweist. Der zeitabhängige Anteil $\tilde{w}_{Ci,j}$ der im Kondensator gespeicherten Energie wird durch die Betriebsart des modularen Multilevelstromrichters bzw. der daran angeschlossenen Last bestimmt. Einfluss haben u.a. der Arbeitspunkt der Last, Form der Gleichtaktspannung sowie interne "Kreisströme".

Der Erfindung liegt nun die Aufgabe zugrunde, ein Verfahren zum Betrieb eines mehrphasigen modularen Multilevelstromrichters anzugeben, wodurch der Kondensatoraufwand des mehrphasigen modularen Multilevelstromrichters reduziert wird.

Diese Aufgabe wird durch die Steuerung/Regelung der in den Kondensatoren der Stromrichterzellen eines mehrphasigen, modularen Multilevelstromrichters gespeicherten Energie in Abhängigkeit eines Arbeitspunktes einer Last und/oder der Betriebsart des Stromrichters erfindungsgemäß gelöst.

Bei einer vorteilhaften Ausführungsform eines modularen Multilevelstromrichters sind eine Vielzahl von Werten gespeicherter Energien jeweils mit zugehörigen Arbeitspunkten und von Werten gespeicherter Energien jeweils mit zugehörigen Betriebsarten des Stromrichters in einer Tabelle abgespeichert. Auf diese Tabelle greift ein Sollwertbildner einer Regelung des Multilevelstromrichters zu, indem er einen bekannten oder ermittelten Arbeitspunkt der Last oder eine bekannte oder ermittelte Betriebsart des Multilevelstromrichters dieser Tabelle zuführt und aus dieser Tabelle einen zugehörigen Wert einer gespeicherten Energie ausliest, der bei der Sollwertgenerierung verwendet wird.

Die Sollwerte, die in Abhängigkeit eines Arbeitspunktes einer Last und/oder der Betriebsart des modularen Multilevelstromrichters online oder offline berechten werden, werden für alle Stromrichterzellen des modularen Multilevelstromrichters oder für die Stromrichterzellen eines jeden Ventilzweiges diese modularen Multilevelstromrichters vorgegeben.

Bei der Verwendung dieses erfindungsgemäßen Verfahrens zum Betrieb eines mehrphasigen, modularen Multilevelstromrichters werden die im zeitlichen Mittel in den Submodul-Kondensatoren gespeicherten Energien in Abhängigkeit eines Arbeitspunktes einer angeschlossenen Last und/oder einer Betriebsart des modularen Multilevelstromrichters gesteuert/geregelt. Dadurch sind niedrigere Kapazitätswerte der Stromrichterzellen eines modularen Multilevelstromrichters möglich, als bei der Verwendung eines bekannten Betriebsverfahrens, bei dem die in den Submodul-Kondensatoren gespeicherten Energien konstant sind.

Zur weiteren Erläuterung der Erfindung wird auf die Zeichnung Bezug genommen, anhand derer das erfindungsgemäße Verfahren näher erläutert werden soll.

FIG 1    zeigt eine schematische Darstellung eines dreiphasigen, modularen Multilevelstromrichters mit N Stromrichterzellen pro Ventilzweig zum Betrieb einer nicht näher dargestellten Last, in der

FIG 2    ist der Aufbau einer Stromrichterzelle des modularen Multilevelstromrichters nach FIG 1 schematisch dargestellt, die

FIG 3    zeigt in einem Diagramm über der Zeit t drei Verläufe von zeitabhängigen Anteilen einer Kondensatorenergie einer Stromrichterzelle des Multilevelstromrichters nach FIG 1 für drei unterschiedliche Lastwinkel $\Phi_{L1}$, $\Phi_{L2}$, $\Phi_{L3}$, die

FIG 4    zeigt in einem Diagramm über der Zeit t einen Verlauf einer Kondensatorspannung einer Stromrichterzelle des modularen Multilevelstromrichters gemäß FIG 1 in Abhängigkeit eines Lastwinkels $\Phi_{L1}$ = -90° ohne die Verwendung des erfindungsgemäßen Verfahrens, wobei in der

FIG 5    dieser zeitliche Verlauf in Abhängigkeit eines Lastwinkels $\Phi_{L2}$ = 0° ohne die Verwendung des erfindungsgemäßen Verfahrens in einem Diagramm über der Zeit t dargestellt ist, und in

FIG 6    dieser zeitliche Verlauf in Abhängigkeit eines Lastwinkels $\Phi_{L3}$ = +90° ohne die Verwendung des erfindungsgemäßen Verfahrens in einem Diagramm über der Zeit t visualisiert ist, in den

FIG 7-9    sind jeweils in einem Diagramm über der Zeit t die zeitlichen Verläufe der FIG 4 bis 6 veranschaulicht, die bei der Verwendung des erfindungsgemäßen Verfahrens entstehen, die

FIG 10    zeigt ein Blockschaltbild einer Schaltungsanordnung, mit dem das erfindungsgemäße Verfahren realisiert wird, und die

FIG 11    zeigt ein Blockschaltbild einer modifizierten Schaltungsanordnung nach FIG 10.

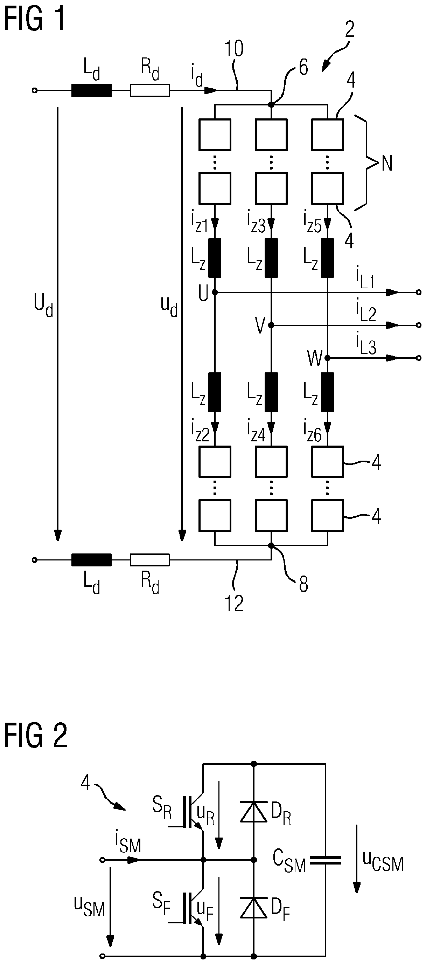

Der in FIG 1 schematisch dargestellte dreiphasige, modulare Multilevelstromrichter 2 weist pro Ventilzweig N Stromrichterzellen 4 auf, die elektrisch in Reihe geschaltet sind. Außerdem weist jeder Ventilzweig dieses dreiphasigen, modularen Multilevelstromrichters 2 eine Drossel $L_Z$ auf, die elektrisch in Reihe zur Reihenschaltung von N Stromrichterzellen 4 verschaltet ist. Jeweils zwei Ventilzweige sind elektrisch in Reihe zu einem Phasenmodul geschaltet, wobei jeweils ein Verbindungspunkt zweier Ventilzweige eines Phasenmoduls eine Wechselspannungs-Klemme U bzw. V bzw. W des dreiphasigen, modularen Multilevelstromrichters 2 bildet, an denen eine nicht näher dargestellte Last angeschlossen ist. Als Last kann ein Elektromotor, insbesondere ein Drehstrommotor, oder ein Energieversorgungsnetz vorgesehen sein, mit denen Energie in beide Richtungen ausgetauscht werden kann. Die beiden Drosseln $L_Z$ eines jeden Phasenmoduls können außerdem magnetisch gekoppelt sein.

Diese drei Phasenmodule sind elektrisch parallel geschaltet, wobei ein oberer Verknüpfungspunkt eine positive Gleichspannungs-Klemme 6 und ein unterer Verknüpfungspunkt eine negative Gleichspannungs-Klemme 8 des dreiphasigen, modularen Multilevelstromrichters 2 bildet. An der Gleichspannungs-Klemme 6 des dreiphasigen, modularen Multilevelstromrichters 2 ist eine positive Stromschiene 10 eines DC-Busses angeschlossen, wobei die negative Stromschiene 12 dieses DC-Busses mit der Gleichspannungs-Klemme 8 des dreiphasigen, modularen Multilevelstromrichters 2 verknüpft ist. Dieser DC-Bus verbindet den dreiphasigen, modularen Multilevelstromrichter 2 gleichspannungsseitig mit einer nicht näher dargestellten Gleichspannungs-Quelle, an der die Gleichspannung $U_d$ ansteht.

An den Phasenmodulen des dreiphasigen, modularen Multilevelstromrichters 2 fällt eine einstellbare Gleichspannung $u_d$ ab. Bei symmetrischem Betrieb dieses Stromrichters 2 steht im zeitlichen Mittel an den Klemmen eines jeden Submoduls 4 eines Ventilzweigs die Klemmspannung:

$$\overline{u}_{Kli,j} = \frac{1}{T_0}\int_0^{T_0} u_{Kli,j}\, dt = \frac{u_d}{2N} \approx \frac{U_d}{2N} \qquad (1)$$

an.

Der Aufbau einer Stromrichterzelle 4 eines modularen Multilevelstromrichters gemäß der DE 101 03 031 A1 ist in FIG 2 schematisch dargestellt. Diese Stromrichterzelle 4 weist eine Halbbrücke zweier elektrisch in Reihe geschalteter abschaltbarer Halbleiterschalter $S_R$ und $S_F$ auf, wobei bevorzugt Insulated-Gate-Bipolar-Transistoren (IGBT) als abschaltbare Halbleiterschalter $S_R$ und $S_F$ verwendet werden. Es können aber alle in Handel erhältlichen Leistungshalbleiter als abschaltbare Halbleiterschalter eines jeden Submoduls verwendet werden. Auswahlkriterium ist die Zellenspannung. Jeder abschaltbare Halbleiterschalter $S_R$ bzw. $S_F$ weist eine Freilaufdiode $D_R$ bzw. $D_F$ auf, die jeweils zum zugehörigen abschaltbaren Halbleiterschalter $S_R$ bzw. $S_F$ invers elektrisch parallel geschaltet ist. Elektrisch parallel zu dieser Halbleiterbrücke ist ein kapazitiver Energiespeicher $C_{SM}$ geschaltet, der aus einer Vielzahl von handelsüblichen Kondensatoren, die elektrisch parallel und/oder elektrisch in Reihe geschaltet sind, realisiert ist. In der nationalen älteren Patentanmeldung mit dem amtlichen Aktenzeichen 10 2011 006 988.7 ist eine Kondensator-Baueinheit einer Stromrichterzelle näher dargestellt. Der Verbindungspunkt der beiden abschaltbaren Halbleiterschalter $S_R$ und $S_F$ bilden eine Anschlussklemme einer Stromrichterzelle 4 des modularen Multilevelstromrichters 2, wogegen ein negativer Anschluss des kapazitiven Energiespeichers $C_{SM}$, der mit einem Emitteranschluss des abschaltbaren Halbleiterschalters $S_F$ elektrisch leitend verbunden ist, eine zweite Anschlussklemme dieser Stromrichterzelle 4 bildet. In der DE 101 03 031A1 ist eine zweite Ausführungsform einer Stromrichterzelle 4 eines modularen Multilevelstromrichters näher dargestellt. Ebenfalls ist dieser DE-Offenlegungsschrift zu entnehmen, welche Schaltzustände wie geschaltet werden können.

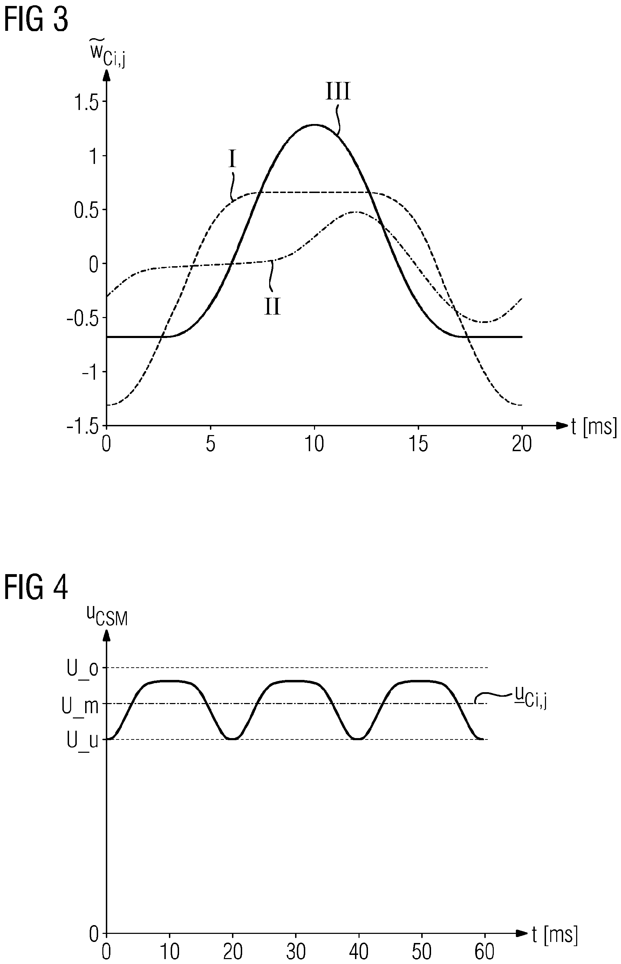

Die Erfindung beruht auf der Erkenntnis, dass an stationären (periodischen) Arbeitspunkten die gespeicherte Energie einer jeden Stromrichterzelle 4 einen zeitabhängigen Anteil $\tilde{w}_{Ci,j}$ und einen im zeitlichen Mittel konstanten Anteil $\overline{w}_{Ci,j}$ aufweist. Dieser konstante Anteil $\overline{w}_{Ci,j}$ entspricht dem (arithmetischen) Mittel der Kondensatorenergie $w_{Ci,j}$. Der zeitabhängige Anteil $\tilde{w}_{Ci,j}$ der Kondensatorenergie $w_{Ci,j}$ wird durch die Betriebsart des modularen Multilevelstromrichters 2 und/oder des Arbeitspunkts der Last bestimmt. Zeitliche Verläufe von drei zeitabhängigen Anteilen $\tilde{w}_{Ci,j}$ einer Kondensatorenergie $w_{Ci,j}$ sind für verschiedene Lastwinkel $\Phi_{L1}$, $\Phi_{L2}$ und $\Phi_{L3}$ in der FIG 3 in einem Diagramm über der Zeit t bei gleichem (sinusförmigen) Laststrom $i_L$, gleiche (sinusförmiger) Leiter-Sternspannung der Last $u_{LN}$ und konstanter Grundschwingungsfrequenz $f_O$ dargestellt. Der zeitliche Verlauf I zeigt den zeitabhängigen Anteil $\tilde{w}_{Ci,j}$ für den Lastwinkel $\Phi_{L1}$ = -90°, der zeitliche Verlauf II den zeitabhängigen Anteil $\tilde{w}_{Ci,j}$ für den Lastwinkel $\Phi_{L2}$ = 0° und den zeitlichen Verlauf III zeigt den zeitabhängigen Anteil $\tilde{w}_{Ci,j}$ einer gespeicherten Energie $w_{Ci,j}$ einer Stromrichterzelle 4 für den Lastwinkel $\Phi_{L3}$ = +90°.

Im Folgenden werden nur die wesentlichen Zusammenhänge für eine Auslegung der Kondensatoren innerhalb fester Spannungsgrenzen angegeben. Für die weitere Betrachtung wird vereinfacht angenommen, dass die Extremwerte $U_{MinCi,j}$ und $U_{MaxCi,j}$ der zulässigen Kondensatorspannung $u_{Ci,j}$ vom Betrieb des Stromrichters 2 unabhängig sind.

Sind die Extremwerte $U_{MinCi,j}$ und $U_{MaxCi,j}$ der zulässigen Kondensatorspannung $u_{Ci,j}$ bekannt, so gilt für den Mindestwert der Kapazität $C_{SMi,j}$ bei konstanter Energie $\overline{w}_{Ci,j}$

$$C_{SMi,j} \geq C_{SM,Mind,k_{i,j}} = \frac{2\Delta W^+_{Maxi,j}}{U^2_{Max_{Ci,j}} - U^2_{Min_{Ci,j}}} \qquad (8)$$

mit der Differenz der Extremwerte $U_{MinCi,j}$ und $U_{MaxCi,j}$ der Energieschwankung über alle (auslegungsrelevanten) Arbeitspunkte AP

$$\Delta W^+_{Maxi,j} = \max_{AP}\{\widetilde{w}_{Ci,j}\} - \min_{AP}\{\widetilde{w}_{Ci,j}\} \qquad (9)$$

Ist die im zeitlichen Mittel gespeicherte Energie $\overline{w}_{Ci,j}$ im Gegensatz dazu vom Arbeitspunkt AP der Last und/oder der Betriebsart des modularen Multilevelstromrichters abhängig, so gilt für den Mindestwert der Kapazität $C_{SMi,j}$

$$C_{SMi,j} \geq C_{SM,Mind,v_{i,j}} = \frac{2\Delta W_{Maxi,j}}{U^2_{Max_{Ci,j}} - U^2_{Min_{Ci,j}}} \qquad (10)$$

mit

$$\Delta W_{Maxi,j} = \max_{AP}\left\{\max_{t\in T_0}\{\widetilde{w}_{Ci,j}\} - \min_{t\in T_0}\{\widetilde{w}_{Ci,j}\}\right\} \qquad (11)$$

Wegen $\Delta W_{Maxi,j} \leq \Delta W^+_{Maxi,j}$ folgt $C_{Mind,vi,j} \leq C_{Mind,ki,j}$

Damit sind bei einer vom Arbeitspunkt AP einer Last des dreiphasigen, modularen Multilevelstromrichters 2 und/oder der Betriebsart dieses Stromrichters 2 abhängigen Energie $\overline{w}_{Ci,j}$ niedrigere Kapazitätswerte möglich, als bei konstanter Energie $\overline{w}_{Ci,j}$.

In den Diagrammen der FIG 4, 5 und 6 sind jeweils der Zeitverlauf der Kondensatorspannung $u_{CSM}$ eines Submoduls 4 des dreiphasigen modularen Multilevelstromrichters 2 gemäß FIG 1 in Abhängigkeit des Lastwinkels $\varphi_{L1}$ = -90°, $\varphi_{L2}$ = 0° und $\varphi_{L3}$ = +90° dargestellt, wobei der Mittelwert der Kondensatorenergie $\overline{w}_{Ci,j}$ konstant ist. Dieser Mittelwert der Kondensatorenergie $\overline{w}_{Ci,j}$ wird durch die Kondensatorspannung $\underline{u}_{Ci,j}$ in diesem Diagramm visualisiert, wobei der Mittelwert der Kondensatorenergie $\overline{w}_{Ci,j}$ und der Kondensatorspannung $\underline{u}_{Ci,j}$ gemäß folgender Gleichung:

$$\underline{u}_{Ci,j} = \sqrt{2/C_{SMi,j}}\,\overline{w}_{Ci,j} \qquad (13)$$

zusammenhängen. Die Kondensatoren $C_{SMi,j}$ der Submodule 4 des zweiphasigen Multilevelstromrichters 2 sind nach herkömmlicher Art und Weise dimensioniert und weisen einen Kapazitätswert $C_I$ auf.

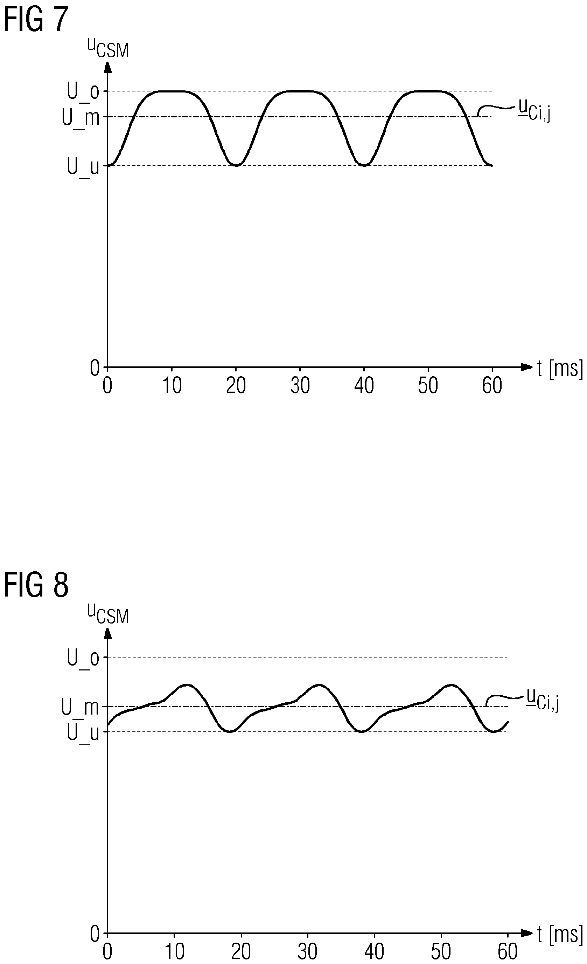

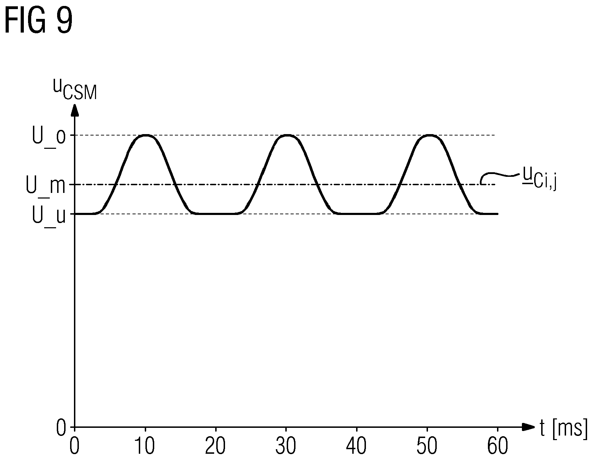

In den Diagrammen der FIG 7, 8 und 9 sind jeweils ein Zeitverlauf der Kondensatorspannung $u_{CSM}$ eines Submoduls 4 des dreiphasigen, modularen Multilevelstromrichters 2 der FIG 1 in Abhängigkeit der Lastwinkel $\varphi_{L1}$ = -90°, $\varphi_{L2}$ = 0° und $\varphi_{L3}$ = +90° dargestellt, wobei der Mittelwert der Kondensatorenergie $\overline{w}_{Ci,j}$ vom Arbeitspunkt AP abhängig ist. Zum Vergleich mit den Zeitverläufen der FIG 4, 5 und 6 sind in den Diagrammen der FIG 7, 8 und 9 der Wert $\underline{u}_C$ zur Visualisierung des Mittelwerts der Kondensatorenergie $\overline{w}_{Ci,j}$ eingetragen. Dadurch, dass der Mittelwert der Kondensatorenergie $\overline{w}_{Ci,j}$ nun abhängig vom Arbeitspunkt AP gesteuert / geregelt wird, ergibt sich für die Kondensatoren $C_{SM}$ der Submodule 4 des dreiphasigen modularen Multilevelstromrichters 2 der FIG 1 ein Kapazitätswert $C_{II}$, der nur noch einen Teil des Kapazitätswertes $C_I$, beispielsweise $C_{II}$ = 0,77 $C_I$, einer herkömmlichen Dimensionierung entspricht. Dadurch reduziert sich der Kondensatoraufwand der Submodule 4 eines dreiphasigen, modularen Multilevelstromrichters 2, wodurch sich nicht nur die Baugröße dieser Submodule 4 verringert, sondern auch die des modularen Multilevelstromrichters 2. Dadurch reduziert sich auch der mechanische und konstruktive Aufwand bei der Realisierung eines dreisphasigen, modularen Multilevelstromrichters 2 gemäß FIG 1.

Um dieses erfindungsgemäße Verfahren einsetzen zu können, muss eine bekannte Regelungseinrichtung eines dreiphasigen, modularen Multilevelstromrichters 2, die aus der WO2008/067785 A1 bekannt ist, entsprechend modifiziert werden.

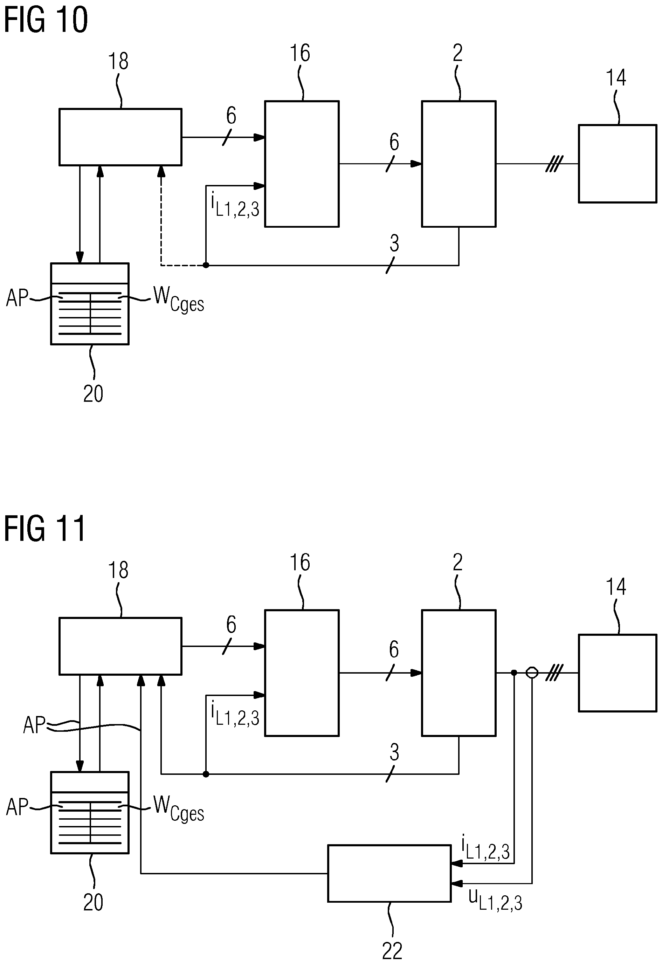

Eine derartige erfindungsgemäße Regelungseinrichtung ist in der FIG 10 näher dargestellt. Dort sind mit 2 der modulare Multilevelstromrichter der FIG 1, mit 14 eine an diesen Multilevelstromrichter 2 angeschlossene Last, mit 16 eine Regeleinheit, insbesondere eine Stromregeleinheit, mit 18 ein Sollwertgenerator und mit 20 eine Speichereinheit bezeichnet. Die Regeleinheit 16 erzeugt aus Soll- und Istwerten beispielsweise die Lastströme $i_{L1}$, $i_{L2}$ und $i_{L3}$, für jeden Ventilzweig einen Zweigspannungs-Sollwert. Der Block 2 umfasst neben der Stromrichterschaltung gemäß FIG 1 auch noch für jeden Ventilzweig eine Ansteuereinheit. Jede Ansteuereinheit generiert aus einem Zweigspannungs-Sollwert Steuersignale für die abschaltbaren Halbleiterschalter $S_R$ und $S_F$ einer jeden Stromrichterzelle 4 eines Ventilzweigs. Die Sollwerte werden von dem Sollwert-Generator 18 in Abhängigkeit beispielsweise eines Drehzahl-Sollwertes generiert, wobei beim Verfahren der WO2008/067785A1 der zeitliche Mittelwert der Kondensatorenergie $\overline{w}_{Ci,j}$ eines jeden Submoduls 4 für alle Arbeitspunkte AP näherungsweise konstant ist.

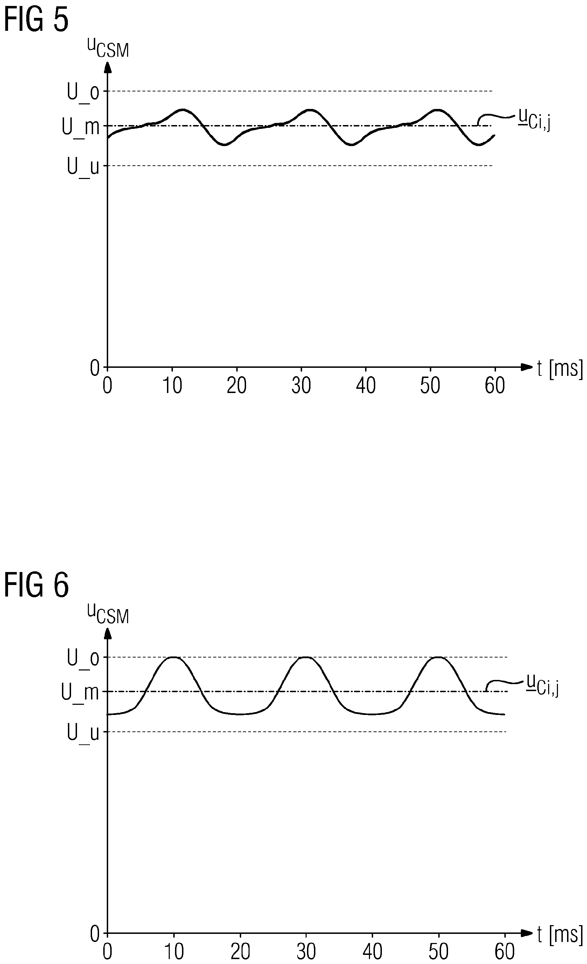

Gemäß dem erfindungsgemäßen Verfahren werden diese Sollwerte derart generiert, dass die zeitlichen Mittelwerte der Kondensatorenergie $\overline{w}_{Ci,j}$ in Abhängigkeit der Arbeitspunkte AP der Last 14 und/oder der Betriebsart des modularen Multilevelstromrichters 2 verändert werden. Dazu ist diesem Sollwert-Generator 18 eine Speichereinheit 20 zugeordnet, in der eine Tabelle hinterlegt ist, die zu jedem Arbeitspunkt AP eine Last und zu jeder Betriebsart des Multilevelstromrichters 2 einen zugehörigen Wert eines Mittelwerts der Kondensatorenergie $\overline{w}_{Ci,j}$ eines Submoduls 4 aufweist. Der Sollwert-Generator 18 sendet einen momentanen Arbeitspunkt AP der Last 14 und / oder einen Wert der Betriebsart des modularen Multilevelstromrichters 2 zur Speichereinheit 20. In Abhängigkeit dieses Arbeitspunkts AP und/oder der Betriebsart wird ein zugehöriger Mittelwert der Kondensatorenergie $\overline{w}_{Ci,j}$ eines Submoduls 4 des modularen Multilevelstromrichters 2 ausgelesen und im Sollwert-Generator 18 zur Generierung von Sollwerten für die Regeleinrichtung 16 verarbeitet. Gemäß der Regeleinrichtung der FIG 5 der WO2008/067785 A1 erhält die Regeleinheit 16 beispielsweise Sollwerte für einen Wirkstrom, einen Blindstrom, eine Gleichspannung bzw. einen Gleichstrom. Außerdem wird ein Sollwert für eine Ventilzweigspannung dem Sollwert-Generator 18 zugeführt.

In der in der Speichereinheit 20 hinterlegten Tabelle können anstelle von Mittelwerten der Kondensatorenergie $\overline{w}_{Ci,j}$ auch Werte der Kondensatorspannung $\underline{u}_{Ci,j}$ oder Werte für die im Multilevelstromrichter 2 kapazitiv gespeicherte Energie $w_{Ciges}$ für jeden Arbeitspunkt AP der Last 14 und/oder der Betriebsart des modularen Multilevelstromrichters 2 abgelegt sein. Wie bereits erwähnt, hängen die Kondensatorenergie $w_{Ci,j}$ und die Kondensatorspannung $u_{Ci,j}$ mittels folgender Gleichung

$$\underline{u}_{Ci,j} = \sqrt{\frac{2}{C_{SMi,j}} \, \overline{w}_{Ci,j}} \qquad\qquad (13)$$

zusammen. Und die im Stromrichter 2 kapazitiv gespeicherte Energie ist die Summe aller in den Kondensatoren der Submodule 4 des Stromrichters 2 gespeicherten Energien.

In der FIG 11 ist eine vorteilhafte Ausführungsform der Regeleinrichtung nach FIG 10 näher dargestellt. Diese vorteilhafte Ausführungsform der Regeleinrichtung unterscheidet sich von der Ausführungsform der FIG 10 dadurch, dass eine Lastschätzer 22 vorgesehen ist, der aus gemessenen Strom- und Spannungswerten $i_{L1}$, $i_{L2}$, $i_{L3}$ und $u_{L1}$, $u_{L2}$, $u_{L3}$ der Last 14 seinen Arbeitspunkt AP berechnet. Dieser berechnete Arbeitspunkt AP der Last 14 wird dem Sollwert-Generator 18 zugeführt, der diesen zur Auslesung eines zugehörigen Mittelwerts der Kondensatorenergie $\overline{w}_{Ci,j}$ verwendet.

Durch die Verwendung des erfindungsgemäßen Verfahrens bei dem der Mittelwert der Kondensatorenergie $\overline{w}_{Ci,j}$ nicht mehr für alle Arbeitspunkte AP der Last 14 und/oder der Betriebsart des modularen Multilevelstromrichters 2 konstant bleibt, sondern in Abhängigkeit der Arbeitspunkte AP der Last 14 und / oder der Betriebsarten des Multilevelstromrichters 2 abgeändert werden, wird erreicht, dass sich der erforderliche Mindest-Kapazitätswert aller Submodule 4 des modularen Multilevelstromrichters 2 wesentlich verringert. Dadurch verringert sich nicht nur der Kondensatoraufwand eines jeden Submoduls 4 des modularen Multilevelstromrichters 2, sondern wegen der geringeren Baugröße der Submodule 4 verringert sich ebenso der mechanische und konstruktive Aufwand bei der Realisierung eines dreiphasigen, modularen Multilevelstromrichters 2.

**Patentansprüche**

1. Verfahren zum Betrieb eines mehrphasigen, modularen Multilevelstromrichters (2), an dessen Wechselspannungs-Klemmen (U,V,W) eine Last (14) angeschlossen ist, wobei zwischen jeweils einer Wechselspannungs-Klemmen (U,V,W) und einer seiner beiden Gleichspannungs-Klemmen (6,8) jeweils eine Reihenschaltung mehrerer Stromrichterzellen (4) und eine Drossel ($L_Z$) geschaltet sind, und wobei mittels einer Regeleinrichtung in Abhängigkeit mehrerer Sollwerte die abschaltbaren Halbleiterschalter ($S_R$,$S_F$) einer jeden Stromrichterzelle (4) angesteuert werden, **dadurch gekennzeichnet, dass** diese Sollwerte derart generiert werden, dass die im zeitlichen Mittel in den Kondensatoren ($C_{SM}$) der Stromrichterzellen (4) gespeicherten Energien ($\overline{w}_{Ci,j}$) vom Arbeitspunkt (AP) der Last (14) und/oder der Betriebsart des modularen Multilevelstromrichters (2) vorgegeben werden.

2. Verfahren nach Anspruch 1, **dadurch gekennzeichnet, dass** in Abhängigkeit eines Arbeitspunktes (AP) ein zugehöriger Wert der gespeicherten Energie ($\overline{w}_{Ci,j}$) vorgesehen wird.

3. Verfahren nach Anspruch 1, **dadurch gekennzeichnet, dass** in Abhängigkeit einer Betriebsart des modularen Multilevelstromrichters (2) ein zugehöriger Wert der gespeicherten Energie ($\overline{w}_{Ci,j}$) vorgesehen wird.

4. Verfahren nach Anspruch 2 oder 3, **dadurch gekennzeichnet, dass** ein Wert der gespeicherten Energie ($\overline{w}_{Ci,j}$) offline berechnet wird.

5. Verfahren nach Anspruch 2 oder 3, **dadurch gekennzeichnet, dass** ein Wert der gespeicherten Energie ($\overline{w}_{Ci,j}$) online berechnet wird.

6. Verfahren nach Anspruch 4, **dadurch gekennzeichnet, dass** die offline berechneten Wert der gespeicherten Energie ($\overline{w}_{Ci,j}$) in einer Tabelle gespeichert werden.

7. Verfahren nach Anspruch 1, **dadurch gekennzeichnet, dass** ein Sollwert der gespeicherten Energie ($\overline{w}_{Ci,j}$) für alle Zellen des mehrphasigen, modularen Multilevelstromrichters (2) vorgegeben wird.

8. Verfahren nach Anspruch 1, **dadurch gekennzeichnet, dass** ein Sollwert der gespeicherten Energie ($\overline{w}_{Ci,j}$) für alle Zellen jeweils eines Ventilzweiges des mehrphasigen, modularen Multilevelstromrichter (2) vorgegeben wird.

9. Verfahren nach Anspruch 1, **dadurch gekennzeichnet, dass** ein Arbeitspunkt (AP) der Last (14) aus Messwerten der Last (14) bestimmt wird.

10. Verfahren nach Anspruch 9, **dadurch gekennzeichnet, dass** als Messwerte der Last (14) Lastströme ($i_{L1}$, $i_{L2}$, $i_{L3}$) und Stromrichter-Ausgangsspannungen ($u_{L1}$, $u_{L2}$, $u_{L3}$) vorgesehen sind.

**Claims**

1. Method for operating a multi-phase modular multi-level power converter (2) having a load (14) connected to the AC voltage terminals (U,V,W) thereof, wherein a plurality of power converter cells (4) connected in series and a choke ($L_Z$) are connected between an AC voltage terminal (U,V,W) and one of its two DC voltage terminals (6,8) in each case, and wherein the turn-off semiconductor switches ($S_R$,$S_F$) of each power converter cell (4) are controlled by means of a control device as a function of a plurality of setpoint values, **characterised in that** these setpoint values are generated such that the energies stored ($\overline{w}_{Ci,j}$) in the capacitors ($C_{SM}$) of the power converter cells (4), averaged over time, are predefined by the operating point (AP) of the load (14) and/or the operating mode of the modular multi-level power converter (2).

2. Method according to claim 1, **characterised in that** an associated value of the stored energy ($\overline{w}_{Ci,j}$) is provided as a function of an operating point (AP).

3. Method according to claim 1, **characterised in that** an associated value of the stored energy ($\overline{w}_{Ci,j}$) is provided as a function of an operating mode of the modular multi-level power converter (2).

4. Method according to claim 2 or 3, **characterised in that** a value of the stored energy ($\overline{w}_{Ci,j}$) is calculated offline.

5. Method according to claim 2 or 3, **characterised in that** a value of the stored energy ($\overline{w}_{Ci,j}$) is calculated online.

**6.** Method according to claim 4, **characterised in that** the value of the stored energy ($\overline{w}_{\text{Ci,j}}$) calculated offline is stored in a table.

**7.** Method according to claim 1, **characterised in that** a setpoint value of the stored energy ($\overline{w}_{\text{Ci,j}}$) is predefined for all the cells of the multi-phase modular multi-level power converter (2).

**8.** Method according to claim 1, **characterised in that** a setpoint value of the stored energy ($\overline{w}_{\text{Ci,j}}$) is predefined for all the cells of a valve arm of the multi-phase modular multi-level power converter (2).

**9.** Method according to claim 1, **characterised in that** an operating point (AP) of the load (14) is determined from measured values of the load (14).

**10.** Method according to claim 9, **characterised in that** load currents ($i_{L1}$, $i_{L2}$, $i_{L3}$) and power converter output voltages ($u_{L1}$, $u_{L2}$, $u_{L3}$) are provided as measured values of the load (14) .


**Revendications**

**1.** Procédé pour faire fonctionner un convertisseur (2) polyphasé modulaire à plusieurs niveaux, aux bornes (U, V, W) de tension alternative duquel est raccordée une charge (14), dans lequel, entre respectivement une borne (U, V, W) de tension alternative et l'une de ses deux bornes (6, 8) de tension continue, sont montés respectivement un circuit série de plusieurs cellules (4) de convertisseur et une bobine ($L_Z$) de self et dans lequel, au moyen d'un dispositif de régulation, on commande, en fonction de plusieurs valeurs de consigne, les interrupteurs ($S_R$, $S_F$) à semiconducteur pouvant être ouverts de chaque cellule (4) de convertisseur, **caractérisé en ce que** l'on crée ces valeurs de consigne, de manière à ce que les énergies ($\overline{w}_{\text{Ci,j}}$) emmagasinées en moyenne dans le temps dans les condensateurs ($C_{\text{SM}}$) des cellules (4) de convertisseur soient prescrites par le point (AP) de travail de la charge (14) et/ou le type de fonctionnement du convertisseur (2) modulaire à plusieurs niveaux.

**2.** Procédé suivant la revendication 1, **caractérisé en ce que** l'on prévoit une valeur lui appartenant de l'énergie ($\overline{w}_{\text{Ci,j}}$) emmagasinée en fonction du point (AP) de travail.

**3.** Procédé suivant la revendication 1, **caractérisé en ce que** l'on prévoit une valeur lui appartenant de l'énergie ($\overline{w}_{\text{Ci,j}}$) emmagasinée en fonction du type de fonctionnement du convertisseur (2) modulaire à plusieurs niveaux.

**4.** Procédé suivant la revendication 2 ou 3, **caractérisé en ce que** l'on calcule en offline une valeur de l'énergie ($\overline{w}_{\text{Ci,j}}$) emmagasinée.

**5.** Procédé suivant la revendication 2 ou 3, **caractérisé en ce que** l'on calcule en ligne une valeur de l'énergie ($\overline{w}_{\text{Ci,j}}$) emmagasinée.

**6.** Procédé suivant la revendication 4, **caractérisé en ce que** l'on met en mémoire dans un tableau la valeur calculée en offline de l'énergie ($\overline{w}_{\text{Ci,j}}$) emmagasinée.

**7.** Procédé suivant la revendication 1, **caractérisé en ce que** l'on prescrit une valeur de consigne de l'énergie ($\overline{w}_{\text{Ci,j}}$) emmagasinée pour toutes les cellules du convertisseur (2) polyphasé modulaire à plusieurs niveaux.

**8.** Procédé suivant la revendication 1, **caractérisé en ce que** l'on prescrit une valeur de consigne de l'énergie ($\overline{w}_{\text{Ci,j}}$) emmagasinée pour toutes les cellules respectivement d'une branche de soupape du convertisseur (2) polyphasé modulaire à plusieurs niveaux.

**9.** Procédé suivant la revendication 1, **caractérisé en ce que** l'on détermine le point (AP) de travail de la charge (14) à partir d'une valeur de mesure de la charge (14).

**10.** Procédé suivant la revendication 9, **caractérisé en ce que** l'on prévoit comme valeur de mesure de la charge (14) des courants ($i_{L1}$, $i_{L2}$, $i_{L3}$) de charge et des tensions ($u_{L1}$, $u_{L2}$, $u_{L3}$) de sortie de convertisseur.

## FIG 1

## FIG 2

FIG 3

FIG 4

FIG 5

FIG 6

FIG 7

FIG 8

FIG 9

FIG 10

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1
- WO 2008067785 A1